(19) Europäisches Patentamt
European Patent Office
Office européen des brevets

(11) Publication number: **0 158 688**
**B1**

(12) # EUROPEAN PATENT SPECIFICATION

(45) Date of publication of patent specification: **26.07.89**

(51) Int. Cl.⁴: **C 04 B 41/81**

(21) Application number: **84104311.0**

(22) Date of filing: **16.04.84**

(54) **Method of making carbon-metal phosphate composite and intermediate impregnated article.**

(43) Date of publication of application:
**23.10.85 Bulletin 85/43**

(45) Publication of the grant of the patent:
**26.07.89 Bulletin 89/30**

(84) Designated Contracting States:
**AT BE CH DE FR GB IT LI LU NL SE**

(56) References cited:
**GB-A- 305 150**
**US-A-3 029 167**
**US-A-3 342 267**

(73) Proprietor: **UNION OIL COMPANY OF CALIFORNIA**
**461 South Boylston Street**
**Los Angeles, CA 90017 (US)**

(72) Inventor: **Block, Michael J.**
**757 Toussau Drive**
**Fullerton, CA (US)**

(74) Representative: **Baillie, Iain Cameron et al**
**c/o Ladas & Parry Isartorplatz 5**
**D-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Courier Press, Leamington Spa, England.

**EP 0 158 688 B1**

**Description**

1. Field of the invention

This invention relates to a method for preparing carbon composites having an improved resistance to oxidation at elevated temperature and a decreased coefficient of friction, and to intermediate impregnated carbon bodies useful in the method.

2. Summary of the art

Carbon oxidizes in air at a measurable rate at approximately 680°F (368°C) while graphite reacts at approximately 340°F (171°C). The high degree of reactivity of carbon and graphite at elevated temperatures in oxidizing atmospheres is a well known phenomenon and therefore has limited the use of this otherwise excellent material in many high temperature applications such as in the rocket and missile field. In industrial applications, the use of carbon anodes in aluminum production and graphite electrodes in steel production is well known. However, oxidative attack at operating temperatures of these processes increases the consumption of the carbon bodies by 15 to 30 percent in many cases. It would thus be desirable if the high temperature reactivity could be eliminated or substantially reduced.

It has been known to impregnate carbon bodies with certain metal salts of acid organophosphates such as organo orthophosphates and pyrophosphates and calcine such impregnated articles to provide a composite of carbon and a metal phosphate having increased resistance to oxidation at elevated temperatures. For example see U.S. Patent 3,029,167. The impregnants are synthesized by reacting stoichiometric amounts of a salt of the metal and an acid organophosphate. The process disclosed provides carbon composites having improved resistance to oxidation, but the impregnants utilized are difficult to synthesize consistently in that the acid organophosphate reacts incompletely with the metal salt in the impregnant product of the synthesis. Thus the chemical composition of the impregnant varies significantly and the performance of the carbon bodies prepared therewith is often erratic. Moreover these impregnants have high viscosities and therefore must be diluted with alcohol prior to impregnation. The addition of alcohol as a diluent decreases the concentration of the metal organophosphate in the pores of the impregnated carbon body, and, therefore, the desired higher loading of the metal phosphate in the carbon cannot be obtained.

In one attempt to overcome the above problem (in the use of an inert diluent), a molten inorganic phosphate salt was utilized to impregnate the carbon article. See, for example, U.S. Patent 3,342,627. While this process eliminates the diluent, the molten phosphate salts are generally high in viscosity and thus are not efficient as impregnants as desired. Moreover very high temperatures must be utilized to melt the phosphate salt. For example, a temperature within the range of from about 400 to 1500°C is suggested for effective impregnation. The equipment and operation requirements of this process are obviously substantial.

Another method of preparing composites of carbon and metal phosphates is disclosed in U.S. Patent 3,666,555 wherein a slurry comprising a particulate aluminosilicate refractory material in phosphoric acid binder is utilized to impregnate the carbon. A slurry, by its two-phase nature, is difficult to distribute uniformly throughout a porous body such as carbon. See also U.S. Patent 4,292,345 wherein a multi-step method of preparing an oxidation-resistant carbon composite is disclosed. This method comprises sequentially impregnating carbon with orthophosphoric acid and an organic compound comprising silicon, titanium or aluminum. The multi-impregnated carbon is then reacted to form a phosphate of silicon, titanium or aluminum.

It is clear that it would be desirable to provide a carbon composite having increased oxidation resistance without going through a multi-step impregnation process, or utilizing molten phosphate salts, inert diluents, or slurries.

Therefore it is one object of this invention to provide a low temperature method for impregnating carbon bodies in a single step with diluent-free solutions of metal metaphosphate precursors.

It is another object of this invention to provide carbon composites having a relatively higher concentration of a metal phosphate uniformly distributed throughout.

It is another object of this invention to provide a process for impregnating carbon utilizing a solution rather than a two-phase slurry or a molten salt to provide a carbon composite having a multi-valent metal phosphate uniformly distributed therethrough.

Additional objects, advantages and features of the invention will become apparent to those skilled in the art from the following description.

Summary of the invention

In one aspect the invention provides an article comprising a porous carbon body impregnated with a metal salt dissolved in a nonionic organophosphorus ester capable of reacting with said metal salt to form a metal metaphosphate.

In another aspect the invention provides a method for preparing a carbon composite having improved resistance to oxidation at elevated temperatures which comprises:

(a) impregnating a porous carbon body with a solution of a metal salt and a nonionic organophosphorus ester;

(b) curing said impregnated carbon body by slowly heating said impregnated carbon body to a temperature below about 150°C but sufficient to react said metal salt with said nonionic organophosphorus ester to form a metal-organophosphorus salt;

(c) calcining said cured carbon body at a temperature of at least 600°C to form a metal metaphosphate; and

(d) recovering a composite of carbon and said metal metaphosphate.

Preferred features of the invention are defined in the dependent claims.

Detailed description of the invention

The carbon body utilized in the method of the invention preferably has a subtantial internal surface provided by a open network of connecting pores and the impregnation should be carried out in a manner to ensure that the solution is distributed uniformly throughout said open network. The carbon body may be composed of graphite, baked carbon, graphite-baked carbon composite, graphite fibers, graphite fibers-graphite composite, etc.

Prior to contact with the impregnation solution, the carbon body may be subjected to a vacuum for a time sufficient to remove any trapped gases from the internal pore structure and therefore ensure the uniform impregnation of the body with the solution. For example, the porous carbon body may be placed in a vacuum chamber and the chamber evacuated to a pressure of less than 5 millimeters of mercury, and preferably less than one millimeter of mercury. The vacuum is continued until substantially all of the trapped gases are removed from the pores of the carbon body. The trapped gases may include air or water vapor. The object of such vacuum treatment is to provide an external and internal surface which is easily wetted by the solution.

The impregnating solution, which is described in greater detail hereinafter, may then be introduced into the vacuum chamber and contacted with the evacuated carbon body at conditions sufficient to impregnate substantially the entire volume of the solution into the pores of the carbon body. An excess amount of solution is not undesirable except that, if substantial alteration of the dimensions of the carbon body is to be avoided, the excess has to be removed prior to further processing. The carbon body may be impregnated with approximately 5 to 10 weight percent of solution as further discussed below. The solution will comprise substantially 100 percent of active ingredients for forming the metal metaphosphate reaction product; however, a lower concentration of diluent may be added to the impregnating solution if desired.

The impregnation of the evacuated carbon body is preferably carried out at an elevated pressure to force the solution into and uniformly throughout the body. For example, a pressure of at least 25 p.s.i.g., (0.27 MPa) more preferably 125 p.s.i.g., (0.96 MPa) may be used to ensure that the solution is uniformly distributed throughout the carbon body.

The temperature range over which the evacuation and impregnation is conducted will vary, depending on a number of factors. The upper limit on the temperature utilized during the evacuation of the carbon body is the temperature at which the carbon is thermally degraded, and in fact, since elevated temperatures would assist in the evacuation, elevated temperatures are generally preferred. On the other hand, during impregnation the upper limit on the temperature would be the temperature at which components of the solution begin to evaporate. The lower temperature limit during evacuation is the temperature at which the rate of the evacuation of trapped gases becomes economically unsatisfactory. The lower temperature limit for impregnation is usually dictated by the viscosity of the solution and the possible freezing out or crystallization of any of the components thereof. In general, both the evacuation and impregnation are carried out at ambient conditions for convenience, although temperatures within the range of from 15 to 40°C. are commonly employed.

The impregnated body may be treated to remove excess solution therefrom. For example, a surface coating of this solution is desirable, but excess solution at the surface may affect the uniformity of the surface coating and the dimensions of the body. In any event, the excess would be wasted during the subsequent curing step. Therefore, the impregnated carbon body may be scrapped at the surface to remove excess solution and such solution recovered for reuse. Simple wiping is usually sufficient to remove excess solution from the surface.

The impregnated carbon body is then cured by slowly increasing the temperature over a period of time. The final temperature which should be at or below 150°C is dictated by the goal of reacting the metal salt with the organophosphorus compound to produce a metal-organophosphorus salt, thus ensuring uniform distribution of the active components of the solution throughout the carbon body and preventing exudation of solution to the surface. Usually, the temperature is increased at a rate of from about 10 to about 30°C per hour, and after reaching a temperature of about 125°C, and being held thereat for 2 to 4 hours, curing is complete.

The cured carbon body is then calcined in an inert atmosphere, e.g. nitrogen, helium, etc., for from about 1 to about 4 hours, at a temperature of at least about 600°C, more preferably at from 700° to 950°C, to decompose the metal-organophosphorus salt and thereby provide an essentially uniform inorganic metal metaphosphate coating on the internal and external surface of the carbon body. The upper temperature of the preferred range of calcination temperatures arises from phase changes which occur in the

metaphosphate at about this temperature, inducing undesirable hygroscopic properties. If the calcining temperature is too low, the metal organophosphorus salt will not decompose satisfactorily.

The calcined carbon body is recovered as a composite of carbon and metal metaphosphate wherein such composite is characterized by an increased resistance to oxidation at elevated temperatures and a decreased coefficient of friction. The calcined composite has the metal metaphosphate distributed substantially uniformly therethrough and continuously coated on the surface thereof.

Now having described the method for preparing the composite of carbon and metal metaphosphate of this invention the impregnating solution and the components used therein will be described in detail.

The impregnating solution comprises a nonionic organophosphorus ester and a metal salt capable of reacting with said nonionic organosphosphorus ester to provide a metal-organophosphorus salt. The impregnating solution may include a diluent such as an alcohol, an amine, an ester, an ether, etc., but preferably the impregnating solution consists essentially of the metal salt dissolved in the nonionic organophosphorus ester. To avoid the problems of an undesirably high viscosity of the impregnating solution and the non-uniform composition of the resulting composite, both of which are problems in the prior art, the organophosphorus ester is free of acid groups or the corresponding salts thereof.

The nonionic organophosphorus ester may be selected from the group consisting of compounds represented by the general formula:

$$(R_1O)(R_2)P(O)_x(R_3)$$

wherein $R_1$ is a radical selected from the group consisting of hydrocarbyl and substituted derivatives thereof; $R_2$ and $R_3$ are radicals independently selected from the group consisting of hydrogen, hydrocarbyl, oxyhydrocarbyl and substituted derivatives of hydrocarbyl and oxyhydrocarbyl radicals; and x is an integer of 0 or 1. Preferably the above hydrocarbyl and oxyhydrocarbyl will comprise from 1 to about 30 carbon atoms. More preferably, the nonionic organophosphosphorus ester is selected from the group consisting of compounds represented by the general formula:

$$(R_4O)(R_5O)P(O)(OR_6)$$

wherein $R_4$, $R_5$ and $R_6$ are independently selected from the group consisting of hydrocarbyl and substituted hydrocarbyl radicals. Preferably $R_4$, $R_5$ and $R_6$ will comprise from about 1 to about 20 carbon atoms. The above substituted hydrocarbyl and oxyhydrocarbyl radicals may include hetero atoms selected from the group consisting of halogen, oxygen, sulfur, nitrogen and phosphorus atoms. More preferably $R_4$, $R_5$ and $R_6$ are independently selected from the group consisting of $C_1$ to $C_6$ alkyl radicals. Even more preferably $R_4$, $R_5$ and $R_6$ are lower alkyl radicals such as methyl and ethyl radicals. Most preferably, all of the organo radicals on the nonionic organophosphorous ester are methyl radicals.

The choice of the organo radicals on the nonionic organophosphorus ester is made with the view of providing a liquid at the above impregnating conditions capable of solubilizing sufficient of the metal salt described below to provide a substantially stoichiometric mixture, i.e., it is desirable that the mole ratio of metal to phosphate be l:n, wherein n is the oxidation state of the metal. Therefore, one appropriate basis of selection of the nonionic organophosphorus ester will be its ability to solubilize the metal salt of choice.

Finally the nonionic organophosphorus ester is preferably selected to be capable of decomposing during the formation of the metal-organophosphorus salt and the metaphosphate of the metal to provide fragments that are easily removed from the composite. For this reason the lower alkyl esters are especially preferred, as the decomposition products are the lower alkyl radicals which are usually removed in chemical combination with the anion of the metal salt, e.g. as methyl chloride, ethyl chloride, etc. when the metal salt of choice is a chloride.

The metal salt functions to react with the non-ionic organophosphorus ester to provide first a metal organophosphorus salt, and then a glassy inorganic metaphosphate wherein said metal salt is combined with the phosphate anion. Any salt which forms a refractory metaphosphate may be utilized in the process of this invention. However, it has been found that certain cations are more efficient in providing an anti-oxidant coating than others. Therefore, preferably the metal salt comprises a multivalent metal cation. The multi-valent metal cation is preferably selected from the group consisting of members of groups IB, IIA, IIB, IIIB, VIA, and VIII of the Periodic Table of the Elements. More preferably, the multi-valent cation is selected from the group consisting of magnesium, zinc, cadmium, copper, aluminum, and iron.

It has been found that the zinc and magnesium salts provide carbon composites that are especially resistant to oxidation at elevated temperatures. Thus, zinc and magnesium are even more preferred multi-valent cations. The most preferred salts for preparing the carbon composites of this invention are the magnesium salts, as demonstrated by the results given in the Examples hereinafter.

The anions of the above metal salts are selected to provide solubility in the nonionic organophosphorus ester and for ease of removal during calcination. The common anions such as the halides (especially chloride and bromide), nitrates, etc. are suitable anions for the metal salts utilized in the impregnating solutions of this invention.

A most preferred group of salts for preparing the novel carbon composites of this invention comprises

$ZnBr_2$, $Zn(NO_3)_2 \cdot EH_2O$, $CrCl_3 \cdot 6H_2O$, $Cd(NO_3)_2 \cdot 4H_2O$, $Al(NO_3)_2 \cdot 9H_2O$, $Cu(NO_3)_2 \cdot 2.5H_2O$, $Mg(NO_3)_2 \cdot 6H_2O$ and $ZnCl_2$.

The impregnating solutions used in the method of preparing the carbon composites of this invention preferably comprise a stoichiometric ratio of the cation of the metal salt and the phosphorus of the nonionic organophosphorus ester, or as close to such stoichiometric ratio as possible. The trivalent metal cations therefore require 3 equivalents of phosporus and the divalent metal cations require 2 equivalents of phosphorus. With the above most preferred metal salts, ratios of from about 50 to 100% of the stoichiometric ratio have been dissolved in the most preferred nonionic organophosphorus ester trimethyl phosphate. However, an excess of the organophosphorus ester is not a liability except that the excess usually does not incorporate in the metaphosphate coating.

The impregnating solution may be made up by dissolving the appropriate metal salt in the nonionic organophosphorus ester at a suitable temperature, e.g. ambient temperature. The solution is preferably made up fresh prior to impregnation to minimize reaction of the metal salt and the nonionic phosphorus ester. However, alternatively, the temperature of the solution may be held below the temperature of reaction to avoid reaction of the metal salt prior to impregnation.

In view of their improved resistance to oxidation and their decreased coefficient of friction, the composites produced by the method of this invention are especially useful in seals, bearings, rotors, and other moving engine parts that are subjected to an oxidizing atmosphere at a high temperature.

The invention is further illustrated by the following example which is illustrative of a specific mode of practicing the invention and is not intended as limiting the scope of the appended claims.

Example

A number of metal salts are dissolved in trimethyl phosphate to provide impregnating solutions wherein the ratio of metal cation to phosphorus is as close to stoichiometric as is possible. The dissolution is effected by agitating the trimethyl phosphate solvent at a temperature of from about 20 to about 40°C while slowing adding the salt thereto. The results of these solubilizing experiments are summarized in Table 1 below.

TABLE 1

| Salt | Wt. % of salt in solution | Stoichiometric ratio metal: phosphorus | % of stoichiometric ratio achieved |
|---|---|---|---|
| $ZnBr_2$ | 44.6 | 1:2 | 100 |
| $Zn(NO_3)_2 \cdot 3H_2O$ | 46.5 | 1:2 | 100 |
| $CrCl_3 \cdot 6H_2O$ | 38.9 | 1:3 | 100 |
| $Cd(NO_3)_2 \cdot 4H_2O$ | 48.2 | 1:3 | 84.3 |
| $Al(NO_3)_2 \cdot 9H_2O$ | 42.1 | 1:3 | 81.3 |
| $Cu(NO_3)_2 \cdot 2.5H_2O$ | 32.2 | 1:2 | 57.1 |
| $Mg(NO_3)_2 \cdot 6H_2O$ | 33.8 | 1:2 | 55.6 |
| $ZnCl_2$ | 32.7 | 1:2 | 100 |

Four individual purified graphite coupons are impregnated with each of the above solutions. Impregnation with a zinc dimethyl pyrophosphate prepared by reacting zinc chloride and dimethyl acid pyrophosphate in accordance with the procedure of Example II of U.S. Patent 3,092,167 are performed as a control. The impregnations are performed in the following manner. A vacuum is pulled on the graphite coupons for 20 min to insure evacuation of the pores. The impregnant is then added and pressurized to 125 p.s.i.g. (0.96 MPA) to force the impregnant into the graphite pores. The coupons are then wiped clean and cured by slowly raising their temperature to 125°C. The coupons are subsequently calcined by rapidly increasing the temperature to 900°C, and holding that temperature for about 2 hours. After curing and calcining, the impregnated graphite coupon usually evidenced a weight increase of about 3.5 weight percent but the weight increase could fall between 2.0 and 6.0 weight percent.

After determination of weight increase, the impregnated graphite coupons were tested for antioxidant efficacy as follows. A thin slice (0.10×0.5×0.75 in) (0.25×1.3×1.9 cm) of an inner section of the impregnated graphite coupon was oxidized under a controlled environment within a thermogravimetric apparatus where temperature, weight loss, and time were monitored and recorded on a strip chart recorder. The test specimens were oxidized at 1450°F (788°C) under a compressed air atmosphere with a

flow rate of about 2500 cc/min through the reaction chamber. Standardized weight loss rates (g/g-hr) were determined from the thermogravimetric apparatus oxidation testing results and these were as a measure of the impregnant antioxidant efficacy.

Results of the antioxidant testing are summarized in Table 2 below. Several features of these results are notable. First, all of the zinc salts perform well and provide equal or better antioxidant properties than the control. This indicates that the anion in the initial zinc salt has no effect on the final zinc metaphosphate. The only purpose the anion has is to increase or decrease the zinc salt solubility in trimethyl phosphate. Second, the performance of magnesium nitrate unexpectedly provides exceptional antioxidant properties, therefore demonstrating the effectiveness of the most preferred multivalent metal cation, magnesium, for the metaphosphate coating. Third, copper and chromium salts form hygroscopic products after calcining. This is a less than desirable characteristic and hence these salts are not preferred. Fourth, aluminum and cadmium salt do not seem to be as effective in providing an antioxidant coating. Therefore, these salts are also not preferred.

TABLE 2

| Run No. | Salt | Rate, g/hr-g | Ave. (S.D.) | Observations |
|---|---|---|---|---|
| 1 | $Cd(NO_3)_2$ | 0.0222 | 0.0246 (0.0030) | Linear wt loss |
| 2 | | 0.0227 | | |
| 3 | | 0.0287 | | |
| 4 | | 0.0248 | | |
| 5 | $Al(NO_3)_3$ | 0.0308 | 0.0313 (0.0025) | Linear wt loss |
| 6 | | 0.0339 | | |
| 7 | | 0.0323 | | |
| 8 | | 0.0280 | | |
| 9 | $CrCl_3$ | 0.0975 | 0.0813 (0.0151) | Non-linear wt loss |
| 10 | | 0.0672 | | |
| 11 | | 0.0908 | | |
| 12 | | 0.0698 | | |
| 13 | $Cu(NO_3)_2$ | 0.0886 | 0.0647 (0.0160) | Non-linear wt loss |
| 14 | | 0.0551 | | |
| 15 | | 0.0562 | | |
| 16 | | 0.0587 | | |
| 17 | $Zn(NO_3)_2$ | 0.0078 | 0.0089 (0.0035) | Linear wt loss |
| 18 | | 0.0141 | | |
| 19 | | 0.0071 | | |
| 20 | | 0.0064 | | |
| 21 | $ZnBr_2$ | 0.0109 | 0.0067 (0.0035) | Linear wt loss |
| 22 | | 0.0037 | | |
| 23 | | 0.0039 | | |
| 24 | | 0.0082 | | |
| 25 | $Mg(NO_3)_2$ | 0.0066 | 0.0058 (0.0012) | Linear wt loss |
| 26 | | 0.0070 | | |
| 27 | | 0.0046 | | |
| 28 | | 0.0051 | | |
| 29 | $ZnCl_2$ | 0.0082 | 0.0064 (0.0017) | Linear wt loss |
| 30 | | 0.0041 | | |
| 31 | | 0.0063 | | |
| 32 | | 0.0069 | | |
| 33 | Control | 0.0098 | 0.0090 (0.0039) | Linear wt loss |
| 34 | | 0.0140 | | |
| 35 | | 0.0048 | | |
| 36 | | 0.0072 | | |

It should be noted that a linear weight loss means that the only process that is occurring is oxidation. A non-linear weight loss means that more than one process is occurring, i.e., loss of absorbed water, carbon

dioxide and/or other volatiles. A non-linear weight loss is less desirable because it means that the composite has a tendency to adsorb volatiles.

While particular embodiments of the invention have been described, it will be understood, of course, that the invention is not limited thereto since many obvious modifications can be made, and it is intended to include within this invention any such modification as will fall within the scope of the appended claims.

**Claims**

1. An article comprising a porous carbon body impregnated with a metal salt dissolved in a nonionic organophosphorus ester capable of reacting with said metal salt to form a metal metaphosphate.

2. An article according to claim 1 wherein said metal salt comprises a multivalent metal cation.

3. An article according to claim 1 or claim 2 wherein said metal salt comprises a metal selected from the group consisting of the metals of Groups IB, IIA, IIB, IIIA, VIA and VIII of the Periodic Table of Elements.

4. An article according to any one of claims 1 to 3 wherein said metal salt comprises a metal selected from the group consisting of magnesium, zinc, cadmium, copper, aluminum and iron.

5. An article according to any one of claims 1 to 4 wherein said metal salt comprises a magnesium salt.

6. An article according to any one of claims 1 to 5 wherein said metal salt comprises a zinc salt.

7. An article according to any one of claims 1 to 6 wherein said nonionic organophosphorus ester is selected from the group consisting of compounds represented by the general formula:

$$(R_1O)(R_2)P(O)_x(R_3)$$

wherein $R_1$ is a radical selected from the group consisting of hydrocarbyl and substituted derivatives thereof, $R_2$ and $R_3$ are radicals independently selected from the group consisting of hydrogen, hydrocarbyl, oxyhydrocarbyl and substituted derivatives of hydrocarbyl and oxyhydrocarbyl, x is an integer of 0 or 1, and wherein said substituted derivatives include one or more heteroatoms selected from the group consisting of halogen, oxygen, sulfur, nitrogen and phosphorus atoms.

8. An article according to any one of claims 1 to 6 wherein said nonionic organophosphorus ester is selected from the group consisting of compounds represented by the general formula:

$$(R_4O)(R_5O)P(O)(OR_6)$$

wherein $R_4$, $R_5$ and $R_6$ are independently selected from the group consisting of hydrocarbyl radicals.

9. An article according to claim 8 wherein $R_4$, $R_5$ and $R_6$ are independently selected from the group consisting of $C_1$ to $C_6$ alkyl radicals.

10. An article according to claim 9 wherein $R_4$, $R_5$ and $R_6$ are methyl radicals.

11. A method for preparing a carbon composite having improved resistance to oxidation at elevated temperatures which comprises:

(a) impregnating a porous carbon body with a solution of a metal salt in a nonionic organophosphorus ester;

(b) curing said impregnated carbon body by slowly heating said impregnated carbon body to a temperature below about 150°C but sufficient to react said metal salt with said nonionic organophosphorus ester to form a metal-organophosphorus salt;

(c) calcining said cured carbon body at a temperature of at least 600°C to form a metal metaphosphate; and

(d) recovering a composite of carbon and said metal metaphosphate.

12. A method according to claim 11 wherein said porous carbon body is subjected to a vacuum to remove gaseous products from the pores thereof prior to impregnating said porous carbon body with said solution of a metal salt in a nonionic organophosphorus ester.

13. A method according to claim 11 or claim 12 wherein excess solution is removed from the surface of said impregnated carbon body prior to reacting said metal salt with said organophosphorus ester.

14. A method according to any one of claims 11 to 13 wherein said porous carbon body is impregnated at an elevated pressure.

15. A method according to any one of claims 11 to 14 wherein said impregnated carbon body is cured by slowly heating said carbon body to a temperature from about 100°C to about 150°C.

16. A method according to any one of claims 11 to 15 wherein said cured carbon body is calcined at a temperature from about 700°C to about 950°C in an inert atmosphere.

17. A method according to any one of claims 11 to 16 wherein said metal salt comprises a multivalent metal cation.

18. A method according to any one of claims 11 to 16 wherein said metal salt comprises a metal selected from the group consisting of the metals of Groups IB, IIA, IIB, IIIA, VIA and VIII of the Periodic Table of Elements.

19. A method according to any one of claims 11 to 18 wherein said metal salt comprises a metal selected from the group consisting of magnesium, zinc, cadmium, copper, aluminum and iron.

20. A method according to any one of claims 11 to 18 wherein said metal salt comprises a magnesium salt.

21. A method according to any one of claims 11 to 18 wherein said metal salt comprises a zinc salt.

22. A method according to any one of claims 11 to 21 wherein said nonionic organophosphorus ester is selected from the group consisting of compounds represented by the general formula:

$$(R_1O)(R_2)P(O)_x(R_3)$$

wherein $R_1$ is a radical selected from the group consisting of hydrocarbyl and substituted derivatives thereof, $R_2$ and $R_3$ are radicals independently selected from the group consisting of hydrogen, hydrocarbyl, oxyhydrocarbyl and substituted derivatives of hydrocarbyl and oxyhydrocarbyl, x is an integer of 0 or 1, and wherein said substituted derivatives include one or more heteroatoms selected from the group consisting of halogen, oxygen, sulfur, nitrogen and phosphorus atoms.

23. A method according to any one of claims 11 to 22 wherein said nonionic organophosphorus ester is selected from the group consisting of compounds represented by the general formula:

$$(R_4O)(R_5O)P(O)(OR_6)$$

wherein $R_4$, $R_5$ and $R_6$ are independently selected from the group consisting of hydrocarbyl radicals.

24. A method according to claim 23 wherein $R_4$, $R_5$ and $R_6$ are independently selected from the group consisting of $C_1$ to $C_6$ alkyl radicals.

25. A method according to claim 24 wherein $R_4$, $R_5$ and $R_6$ are methyl radicals.

26. An impregnating solution useful for preparing a carbon composite having improved resistance to oxidation which comprises a metal salt dissolved in a nonionic organophosphorus ester, said metal salt being capable of reacting with said non-ionic organophosphorus ester to form a metal metaphosphate.

27. An impregnating solution according to claim 26 wherein said metal salt comprises a multivalent metal cation.

28. An impregnating solution according to claim 26 or claim 27 wherein said metal salt comprises a metal selected from the group consisting of the metals of Groups IB, IIA, IIB, IIIA, VIA and VIII of the Periodic Table of Elements.

29. An impregnating solution according to claims 26, 27 and 28 wherein said metal salt comprises a metal selected from the group consisting of magnesium, zinc, cadmium, copper, aluminum and iron.

30. An impregnating solution according to any one of claims 26 to 29 wherein said metal salt comprises a magnesium salt.

31. An impregnating solution according to any one of claims 26 to 30 wherein said metal salt comprises a zinc salt.

32. An impregnating solution according to any one of claims 26 to 31 wherein said nonionic organophosphorus ester is selected from the group consisting of compounds represented by the general formula:

$$(R_1O)(R_2)P(O)_x(R_3)$$

wherein $R_1$ is a radical selected from the group consisting of hydrocarbyl and substituted derivatives thereof, $R_2$ and $R_3$ are radicals independently selected from the group consisting of hydrogen, hydrocarbyl, oxyhydrocarbyl and substituted derivatives of hydrocarbyl and oxyhydrocarbyl, x is an integer of 0 or 1, and wherein said substituted derivatives include one or more heteratoms selected from the group consisting of halogen, oxygen, sulfur, nitrogen and phosphorus atoms.

33. An impregnating solution according to any one of claims 26 to 31 wherein said nonionic organophosphorus ester is selected from the group consisting of compounds represented by the general formula:

$$(R_4O)(R_5O)P(O)(OR_6)$$

wherein $R_4$, $R_5$ and $R_6$ are independently selected from the group consisting of hydrocarbyl radicals.

34. An impregnating solution according to claim 33 wherein $R_4$, $R_5$ and $R_6$ are independently selected from the group consisting of $C_1$ to $C_6$ alkyl radicals.

35. An impregnating solution according to claim 34 wherein $R_4$, $R_5$ and $R_6$ are methyl radicals.

**Patentansprüche**

1. Produkt bestehend aus einem porösen Kohlenstoffkörper, welcher mit einem Metallsalz imprägniert ist, das in einem nicht-ionogenen Organophosphor-Ester gelöst ist, welcher geeignet ist, mit dem Metallsalz zu reagieren, um ein Metall-Metaphosphat zu bilden.

2. Produkt nach Anspruch 1, dadurch gekennzeichnet, daß das Metallsalz ein mehrwertiges Metallkation enthält.

3. Produkt nach Anspruch 1 oder 2, dadurch gekennzeichnet, daß das Metallsalz ein Metall enthält, welches aus der Gruppe bestehend aus den Metallen der Gruppen IB, IIA, IIB, IIIA, VIA und VIII der Tabelle des Periodensystems der Elemente ausgewählt ist.

4. Produkt nach einem der Ansprüche 1 bis 3, dadurch gekennzeichnet, daß das Metallsalz ein Metall enthält, welches aus der Gruppe bestehend aus Magnesium, Zink, Kadmium, Kupfer, Aluminium und Eisen ausgewählt ist.

5. Produkt nach einem der Ansprüche 1 bis 4, dadurch gekennzeichnet, daß das Metallsalz ein Magnesiumsalz enthält.

6. Produkt nach einem der Ansprüche 1 bis 5, dadurch gekennzeichnet, daß das Metallsalz ein Zinksalz enthält.

7. Produkt nach einem der Ansprüche 1 bis 6, dadurch gekennzeichnet, daß der nichtionogene Organophosphor-Ester aus der Gruppe bestehend aus Verbindungen, die durch folgende allgemeine Formel dargestellt werden, ausgewählt ist:

$$(R_1O)(R_2)P(O)_x(R_3)$$

wobei $R_1$ ein Radikal ist, welches aus der Gruppe bestehend aus Hydrocarbyl und substituierte Derivate davon ausgewählt ist, $R_2$ und $R_3$ Radikale sind, welche unabhängig aus der Gruppe bestehend aus Wasserstoff, Hydrocarbyl, Oxyhydrocarbyl und substituierte Derivate von Hydrocarbyl und Oxyhydrocarbyl ausgewählt sind, x eine ganze Zahl, 0 oder 1 ist, und wobei die substituierten Derivate ein oder mehrere Heteroatome enthalten, die aus der Gruppe bestehend aus Halogen-, Sauerstoff-, Schwefel-, Stickstoff- und Phosphoratomen ausgewählt sind.

8. Produkte nach einem der Ansprüche 1 bis 6, dadurch gekennzeichnet, daß der nichtionogene Organophosphor-Ester aus der Gruppe bestehend aus Verbindungen, die durch folgende allgemeine Formel dargestellt werden, ausgewählt ist:

$$(R_4O)(R_5O)P(O)(OR_6)$$

wobei $R_4$, $R_5$ und $R_6$ unabhängig aus der Gruppe bestehend aus Hydrocarbylradikalen ausgewählt sind.

9. Produkt nach Anspruch 8, dadurch gekennzeichnet, daß $R_4$, $R_5$ und $R_6$ unabhängig aus der Gruppe bestehend aus $C_1$ bis $C_6$ Alkylradikalen ausgewählt sind.

10. Produkt nach Anspruch 9, dadurch gekennzeichnet, daß $R_4$, $R_5$ und $R_6$ Methylradikale sind.

11. Verfahren zur Erzeugung eines Kohlenstoff-Verbundmaterials, welches einen verbesserten Oxidationswiderstand bei hohen Temperaturen besitzt, enthaltend folgende Verfahrensschritte:

(a) Imprägnieren eines porösen Kohlenstoffkörpers mit einer Lösung eines Metallsalzes und eines nichtionogenen Organophosphor-Ester;

(b) Nachbehandlung des imprägnierten Kohlenstoffkörpers durch langsames Erwärmen des imprägnierten Kohlenstoffkörpers auf eine Temperatur unter ungefähr 150°C, jedoch ausreichend hoch, daß das Metallsalz mit dem nichtionogenen Organophosphor-Ester reagiert, um ein Metall-Organophosphorsalz zu bilden;

(c) Kalzinieren des nachbehandelten Kohlenstoffkörpers bei einer Temperatur von zumindest 600°C, um ein Metall-Metaphosphat zu bilden; und

(d) Rückgewinnung eines Verbundmaterials aus Kohlenstoff und dem Metall-Metaphosphat.

12. Verfahren nach Anspruch 11, dadurch gekennzeichnet, daß der poröse Kohlenstoffkörper einem Vakuum ausgesetzt wird, um gasförmige Produkte aus dessen Hohlräum vor dem Imprägnieren des porösen Kohlenstoffkörpers mit der Lösung eines Metallsalzes und eines nichtionogenen Organophosphor-Ester zu entfernen.

13. Verfahren nach Anspruch 11 oder 12, dadurch gekennzeichnet, daß eine Überschußlösung aus der Oberfläche des imprägnierten Kohlenstoffkörpers vor dem Reagieren des Metallsalzes mit dem Organophosphor-Ester entfernt wird.

14. Verfahren nach einem der Ansprüche 11 bis 13, dadurch gekennzeichnet, daß der poröse Kohlenstoffkörper bei einem erhöhten Druck imprägniert wird.

15. Verfahren nach einem der Ansprüche 11 bis 14, dadurch gekennzeichnet, daß der imprägnierte Kohlenstoffkörper durch langsames Erwärmen des Kohlenstoffkörpers auf eine Temperatur von ungefähr 100°C bis ungefähr 150°C nachbehandelt wird.

16. Verfahren nach einem der Ansprüche 11 bis 15, dadurch gekennzeichnet, daß der nachbehandelte Kohlenstoffkörper bei einer Temperatur von ungefähr 700°C bis ungefähr 950°C in einer inerten Atmosphäre kalziniert wird.

17. Verfahren nach einem der Ansprüche 11 bis 16, dadurch gekennzeichnet, daß das Metallsalz ein mehrwertiges Metallkation enthält.

18. Verfahren nach einem der Ansprüche 11 bis 16, dadurch gekennzeichnet, daß das Metallsalz ein Metall enthält, welches aus der Gruppe bestehend aus den Metallen der Gruppen IB, IIA, IIB, IIIA, VIA und VIII der Tablelle des Periodensystems der Elemente ausgewählt wird.

19. Verfahren nach einem der Ansprüche 11 bis 18, dadurch gekennzeichnet, daß das Metallsalz ein

Metall enthält, welches aus der Gruppe bestehend aus Magnesium, Zink, Kadmium, Kupfer, Aluminium und Eisen ausgewählt wird.

20. Verfahren nach einem der Ansprüche 11 bis 18, dadurch gekennzeichnet, daß das Metallsalz ein Magnesiumsalz enthält.

21. Verfahren nach einem der Ansprüche 11 bis 18, dadurch gekennzeichnet, daß das Metallsalz ein Zinksalz enthält.

22. Verfahren nach einem der Ansprüche 11 bis 21, dadurch gekennzeichnet, daß der nichtionogene Organophosphor-Ester aus der Gruppe bestehend aus Verbindungen, die durch folgende allgemeine Formel dargestellt werden, ausgewählt wird:

$$(R_1O)(R_2)P(O)_x(R_3)$$

wobei $R_1$ ein Radikal ist, welches aus der Gruppe bestehend aus Hydrocarbyl und substituierten Derivaten davon ausgewählt wird, $R_2$ und $R_3$ Radikale sind, welche unabhängig aus der Gruppe bestehend aus Wasserstoff, Hydrocarbyl, Oxyhydrocarbyl und substituierten Derivaten von Hydrocarbyl und Oxyhydrocarbyl ausgewählt werden, x eine ganze Zahl, 0 oder 1 ist, und wobei die substituierten Derivate ein oder mehrere Heteroatome enthalten, die aus der Gruppe bestehend aus Halogen-, Sauerstoff-, Schwefel-, Stickstoff- und Phosphoratomen ausgewählt werden.

23. Verfahren nach einem der Ansprüche 11 bis 22, dadurch gekennzeichnet, daß der nichtionogene Organophosphor-Ester aus der Gruppe bestehend aus Verbindungen, die durch folgende allgemeine Formel dargestellt werden, ausgewählt wird:

$$(R_4O)(R_5O)P(O)(OR_6)$$

wobei $R_4$, $R_5$ und $R_6$ unabhängig aus der Gruppe bestehend aus Hydrocarbylradikalen ausgewählt werden.

24. Verfahren nach Anspruch 23, dadurch gekennzeichnet, daß $R_4$, $R_5$ und $R_6$ unabhängig aus der Gruppe bestehend aus $C_1$ bis $C_6$ Alkylradikalen ausgewählt werden.

25. Verfahren nach Anspruch 24, dadurch gekennzeichnet, daß $R_4$, $R_5$ und $R_6$ Methylradikale sind.

26. Imprägnierlösung, verwendbar zur Erzeugung eines Kohlenstoff-Verbundmaterials, welches einen verbesserten Oxidationswiderstand besitzt, die ein Metallsalz enthält, das in einem nichtionogenen Organophosphor-Ester gelöst ist, wobei das Metallsalz geeignet ist, mit dem nichtionogenen Organophosphor-Ester zu reagieren, um ein Metall-Metaphosphat zu bilden.

27. Imprägnierlösung nach Anspruch 26, dadurch gekennzeichnet, daß das Metallsalz ein mehrwertiges Metallkation enthält.

28. Imprägnierlösung nach Anspruch 26 oder 27, dadurch gekennzeichnet, daß das Metallsalz ein Metall enthält, welches aus der Gruppe bestehend aus den Metallen der Gruppen IB, IIA, IIB, IIIA, VIA und VIII der Tabelle des Periodensystems der Elemente ausgewählt ist.

29. Imprägnierlösung nach den Ansprüchen 26, 27 und 28, dadurch gekennzeichnet, daß das Metallsalz ein Metall enthält, welches aus der Gruppe bestehend aus Magnesium, Zink, Kadmium, Kupfer, Aluminium und Eisen ausgewählt ist.

30. Imprägnierlösung nach einem der Ansprüche 26 bis 29, dadurch gekennzeichnet, daß das Metallsalz ein Magnesiumsalz enthält.

31. Imprägnierlösung nach einem der Ansprüche 26 bis 30, dadurch gekennzeichnet, daß das Metallsalz ein Zinksalz enthält.

32. Imprägnierlösung nach einem der Ansprüche 26 bis 31, dadurch gekennzeichnet, daß der nichtionogene Organophosphor-Ester aus der Gruppe bestehend aus Verbindungen, die durch folgende allgemeine Formel dargestellt werden, ausgewählt ist:

$$(R_1O)(R_2)P(O)_x(R_3)$$

wobei $R_1$ ein Radikal ist, welches aus der Gruppe bestehend aus Hydrocarbyl und substituierte Derivate davon ausgewählt ist, $R_2$ und $R_3$ Radikale sind, welche unabhängig aus der Gruppe bestehend aus Wasserstoff, Hydrocarbyl, Oxyhydrocarbyl und substituierten Derivaten von Hydrocarbyl und Oxyhydrocarbyl ausgewählt sind, x eine ganze Zahl, 0 oder 1 ist, und wobei die substituierten Derivate ein oder mehrere Heteroatome enthalten, die aus der Gruppe bestehend aus Halogen-, Sauerstoff-, Schwefel-, Stickstoff- und Phosphoratomen ausgewählt sind.

33. Imprägnierlösung nach einem der Ansprüche 26 bis 31, dadurch gekennzeichnet, daß der nichtionogene Organophosphor-Ester aus der Gruppe bestehend aus Verbindungen, die durch folgende allgemeine Formel dargestellt werden, ausgewählt ist:

$$(R_4O)(R_5O)P(O)(OR_6)$$

wobei $R_4$, $R_5$ und $R_6$ unabhängig aus der Gruppe bestehend aus Hydrocarbylradikalen ausgewählt sind.

34. Imprägnierlösung nach Anspruch 33, dadurch gekennzeichnet, daß $R_4$, $R_5$ und $R_6$ unabhängig aus der Gruppe bestehend aus $C_1$ bis $C_6$ Alkylradikalen ausgewählt sind.

35. Imprägnierlösung nach Anspruch 34, dadurch gekennzeichnet, daß $R_4$, $R_5$ und $R_6$ Methylradikale sind.

**Revendications**

1. Un article comprenant un corps en carbone poreux imprégné par un sel métallique dissous dans un ester organophosphoré non ionique capable de réagir avec ledit sel métallique pour former un métaphosphate métallique.

2. Un article selon la revendication 1, selon laquelle ledit sel métallique comprend un cation métallique multivalent.

3. Un article selon la revendication 1 ou 2, selon laquelle ledit sel métallique comprend un métal choisi dans le groupe comprenant les métaux des groupes IB, IIA, IIB, IIIA, VIA et VIII du tableau périodique des éléments.

4. Un article selon l'une des revendications 1 à 3, selon laquelle ledit sel métallique comprend un métal choisi dans le groupe comprenant le magnésium, le zinc, le cadmium, le cuivre, l'aluminium et le fer.

5. Un article selon l'une des revendications 1 à 4, selon laquelle ledit sel métallique comprend un sel de magnésium.

6. Un article selon l'une quelconque des revendications 1 à 5, selon laquelle ledit sel métallique comprend un sel de zinc.

7. Un article selon l'une quelconque des revendications 1 à 6, selon laquelle ledit ester organophosphoré non ionique est choisi dans le groupe comprenant les composés représentés par la formule générale:

$$(R_1O)(R_2)P(O)_x(R_3)$$

dans laquelle $R_1$ est un radical choisi dans le groupe comprenant le radical hydrocarbyle et ses dérivés substitués, $R_2$ et $R_3$ sont des radicaux choisis indépendamment dans le groupe comprenant l'hydrogène, les radicaux hydrocarbyles, oxyhydrocarbyles et les dérivés substitués des radicaux hydrocarbyles et oxyhydrocarbyles, x est un nombre entier égal à 0 ou 1, et dans laquelle lesdits dérivés substitués incluent un ou plusieurs hétéroatomes choisis dans le groupe comprenant les atomes d'halogène, d'oxygène, de soufre, d'azote et de phosphore.

8. Un article selon l'une quelconque des revendications 1 à 6, selon laquelle ledit ester organophosphoré non ionique est choisi dans le groupe comprenant les composés représentés par la formule générale:

$$(R_4O)(R_5O)P(O)(OR_6)$$

dans laquelle $R_4$, $R_5$ et $R_6$ sont choisis indépendamment dans le groupe comprenant les radicaux hydrocarbyles.

9. Un article selon la revendication 8, selon laquelle $R_4$, $R_5$ et $R_6$ sont choisis indépendamment dans le groupe comprenant les radicaux alkyles en $C_1$ à $C_6$.

10. Un article selon la revendication 9, selon laquelle $R_4$, $R_5$ et $R_6$ sont des radicaux méthyles.

11. Un procédé de préparation d'un composite de carbone ayant une résistance améliorée à l'oxydation aux températures élevées qui comprend:

(a) l'imprégnation d'un corps en carbone poreux par une solution d'un sel métallique et d'un ester organophosphoré non ionique;

(b) le durcissement dudit corps en carbone imprégné par chauffage lent dudit corps en carbone imprégné à une température inférieure à environ 150°C, mais suffisante pour faire réagir ledit sel métallique avec ledit ester organophosphoré non ionique pour former un sel organophosphoré métallique;

(c) la calcination dudit corps en carbone durci à une température d'au moins 600°C pour former un méta-phosphate métallique; et

(d) la récupération d'un composite de carbone et dudit métaphosphate métallique.

12. Un procédé selon la revendication 11, selon laquelle ledit corps en carbone poreux est soumis à un vide pour éliminer les produits gazeux des pores dudit corps avant l'imprégnation dudit corps en carbone poreux par ladite solution d'un sel métallique et d'un ester organophosphoré non ionique.

13. Un procédé selon la revendication 11 ou 12, selon laquelle l'excès de solution est éliminé de la surface dudit corps en carbone imprégné avant la réaction dudit sel métallique avec ledit ester organophosphoré.

14. Un procédé selon l'une quelconque des revendications 11 à 13, selon laquelle ledit corps en carbone poreux est imprégné à une pression élevée.

15. Un procédé selon l'une quelconque des revendications 11 à 14, selon laquelle ledit corps en carbone imprégné est durci par chauffage lent dudit corps en carbone à une température d'environ 100°C à environ 150°C.

16. Un procédé selon l'une quelconque des revendications 11 à 15, selon laquelle ledit corps en carbone durci est calciné à une température d'environ 700°C à environ 950°C dans une atmosphère inerte.

17. Un procédé selon l'une quelconque des revendications 11 à 16, selon laquelle ledit sel métallique comprend un cation métallique multivalent.

18. Un procédé selon l'une quelconque des revendications 11 à 16, selon laquelle ledit sel métallique comprend un métal choisi dans le groupe comprenant les métaux des groupes IB, IIA, IIB, IIIA, VIA et VIII du tableau périodique des éléments.

19. Un procédé selon l'une quelconque des revendications 11 à 18, selon laquelle ledit sel métallique comprend un métal choisi dans le groupe comprenant le magnésium, le zinc, le cadmium, le cuivre, l'aluminium et le fer.

20. Un procédé selon l'une quelconque des revendications 11 à 18, selon laquelle ledit sel métallique comprend un sel de magnésium.

21. Un procédé selon l'une quelconque des revendications 11 à 18, selon laquelle ledit sel métallique comprend un sel de zinc.

22. Un procédé selon l'une quelconque des revendications 11 à 21, selon laquelle ledit ester organophosphoré non ionique est choisi dans le groupe comprenant les composés représentés par la formule générale:

$$(R_1O)(R_2)P(O)_x(R_3)$$

dans laquelle $R_1$ est un radical choisi dans le groupe comprenant le radical hydrocarbyle et ses dérivés substitués, $R_2$ et $R_3$ sont des radicaux choisis indépendamment dans le groupe comprenant l'hydrogène, les radicaux hydrocarbyles, oxyhydrocarbyles et les dérivés substitués des radicaux hydrocarbyles et oxyhydrocarbyles, x est un nombre entier égal à 0 ou à 1, et dans laquelle lesdits dérivés substitués incluent un ou plusieurs hétéroatomes choisis dans le groupe comprenant les atomes d'halogène d'oxygène, de soufre, d'azote et de phosphore.

23. Un procédé selon l'une quelconque des revendications 11 à 22, selon laquelle ledit ester organophosphoré non ionique est choisi dans le groupe comprenant les composés représentés par la formule générale:

$$(R_4O)(R_5O)P(O)(OR_6)$$

dans laquelle $R_4$, $R_5$ et $R_6$ sont choisis indépendamment dans le groupe comprenant les radicaux hydrocarbyles.

24. Un procédé selon la revendication 23, selon laquelle $R_4$, $R_5$ et $R_6$ sont choisis indépendamment dans le groupe comprenant les radicaux alkyles en $C_1$ à $C_6$.

25. Un procédé selon la revendication 24, selon laquelle $R_4$, $R_5$ et $R_6$ sont des radicaux méthyles.

26. Une solution d'imprégnation utile pour préparer un composite de carbone ayant une résistance améliorée à l'oxydation qui comprend un sel métallique dissous dans un ester organophosphoré non ionique, ledit sel métallique étant susceptible de réagir avec ledit ester organophosphoré non ionique pour former un metaphosphate métallique.

27. Une solution d'imprégnation selon la revendication 26, selon laquelle ledit sel métallique comprend un cation métallique multivalent.

28. Une solution d'imprégnation selon la revendication 26 ou 27, dans laquelle ledit sel métallique comprend un métal choisi dans le groupe comprenant les métaux des groupes IB, IIA, IIB, IIIA, VIA et VIII du tableau périodique des éléments.

29. Une solution d'imprégnation selon les revendications 26, 27 et 28, selon lesquelles ledit sel métallique comprend un métal choisi dans le groupe comprenant le magnésium, le zinc, le cadmium, le cuivre, l'aluminium et le fer.

30. Une solution d'imprégnation selon l'une quelconque des revendications 26 à 29, selon laquelle ledit sel métallique comprend un sel de magnésium.

31. Une solution d'imprégnation selon l'une quelconque des revendications 26 à 30, selon laquelle le sel métallique comprend un sel de zinc.

32. Une solution d'imprégnation selon l'une quelconque des revendications 26 à 31, selon laquelle ledit ester organophosphoré non ionique est choisi dans le groupe comprenant les composés représentés par la formule générale:

$$(R_1O)(R_2)P(O)_x(R_3)$$

dans laquelle $R_1$ est un radical choisi dans le groupe comprenant le radical hydrocarbyle et ses dérivés substitués, $R_2$ et $R_3$ sont des radicaux choisis indépendamment dans le groupe comprenant l'hydrogène, les radicaux hydrocarbyles, oxyhydrocarbyles, et les dérivés substitués des radicaux hydrocarbyles et oxyhydrocarbyles, x est un nombre entier égal à 0 ou 1 et dans laquelle lesdits dérivés substitués incluent un ou plusieurs hétéroatomes choisis dans le groupe comprenant les atomes d'halogène, d'oxygène, de soufre, d'azote et de phosphore.

33. Une solution d'imprégnation selon l'une quelconque des revendications 26 à 31, selon laquelle ledit

ester organophosphoré non ionique est choisi dans le groupe comprenant les composés représentés par la formule générale:

$$(R_4O)(R_5O)P(O)(OR_6)$$

dans laquelle $R_4$, $R_5$ et $R_6$ sont choisis indépendamment dans le groupe comprenant les radicaux hydrocarbyles.

34. Une solution d'imprégnation selon la revendication 33, selon laquelle $R_4$, $R_5$ et $R_6$ sont choisis indépendamment dans le groupe comprenant les radicaux alkyles en $C_1$ à $C_6$.

35. Une solution d'imprégnation selon la revendication 34, selon laquelle $R_4$, $R_5$ et $R_6$ sont des radicaux méthyles.